# EUROPEAN PATENT SPECIFICATION

(11) **EP 4 155 234 B1**
(45) Date of publication and mention of the grant of the patent: **11.02.2026**
(21) Application number: 21821088.8
(22) Date of filing: 29.06.2021
(51) Int. Cl.: B65G 1/04, B65G 1/137, B25J 9/16

(54) **CONTROL METHOD AND APPARATUS FOR WAREHOUSE ROBOT, AND ROBOT AND WAREHOUSE SYSTEM**
STEUERUNGSVERFAHREN UND -VORRICHTUNG FÜR EINEN LAGERROBOTER SOWIE ROBOTER UND LAGERSYSTEM
PROCÉDÉ ET APPAREIL DE COMMANDE POUR ROBOT D'ENTREPÔT, AINSI QUE ROBOT ET SYSTÈME D'ENTREPÔT

(30) Priority: 12.06.2020 CN 202010536391
(43) Date of publication of application: 29.03.2023
(73) Proprietor: Hai Robotics Co., Ltd., Shenzhen, Guangdong 518000 (CN)
(72) Inventor: LI, Huixiang, Shenzhen, Guangdong 518000 (CN); CHENG, Jui-chun, Shenzhen, Guangdong 518000 (CN); ZHAO, Ying, Shenzhen, Guangdong 518000 (CN)
(74) Representative: Gulde & Partner
(86) International application number: PCT/CN2021/103045
(87) International publication number: WO 2021/249570

(56) References cited:
- WO-A1-2019/109644
- CN-A- 105 598 965
- CN-A- 105 751 196
- CN-A- 108 044 627
- CN-A- 109 956 251
- JP-A- H1 166 321
- JP-B2- 5 429 614
- US-A1- 2012 143 726

## Description

### CROSS-REFERENCE TO RELATED APPLICATIONS

The disclosure claims priority to Chinese patent application No. 202010536391.4 with an application title of "WAREHOUSE ROBOT CONTROL METHOD AND APPARATUS, ROBOT, AND WAREHOUSE SYSTEM" filed on June 12, 2020 to the Chinese Patent Office.

### TECHNICAL FIELD

The disclosure relates to the field of intelligent warehouse technologies, and in particular, to a warehouse robot control method and apparatus, a robot, and a warehouse system.

### BACKGROUND

Warehouse robots adopt intelligent operating systems, realize automatic pickup and storage of goods through system instructions, and can run for 24 hours in an uninterrupted manner, replacing manual management and operation, and improving the efficiency of warehousing, and thus are widely used and favored.

However, the existing intelligent warehouse system can only realize the automatic pickup and storage of standard containers with completely consistent standards, which leads to the need for a user to buy or rent standard containers and perform goods packing and other operations when storing goods, which increases the cost and processing steps, and the user experience is not good. Meanwhile, it also leads to the application range of the intelligent warehouse system.

US patent application US2012143726A1 discloses the preamble of claims 1 and 12 and shows an automated storage and distribution system (ASDS) for storing and then distributing articles. The ASDS includes an entry means for controlling entry into the system of a plurality of closed shipping containers. A sensing means determines the position of at least a portion of an outside surface of each one of the plurality of closed shipping containers that have entered into the system. An automated forming means uses the determined position specific to each of the closed shipping containers to form an opening in each of the plurality of the shipping containers. A storing means stores the plurality of opened shipping containers inside a storage area of the system. A computer controlled retrieving means enters into selected ones of the opened shipping containers located in the storage area, by passing through the formed opening so as to retrieve an article from inside one of the stored opened shipping containers, and a moving means moves the retrieved articles to an output of the system.

### SUMMARY

The invention is set out in the appended set of claims. Embodiments of the disclosure provide a warehouse robot control method and apparatus, a robot, and a warehouse system. For different types of containers, based on pose position recognition algorithms, automatic obtaining of different types of container pose positions is implemented and warehouse efficiency and application range of the warehouse robot are improved.

For a first aspect, an embodiment of the disclosure provides a warehouse robot control method, including:
obtaining a container scheduling instruction of a first target container, where the container scheduling instruction includes a container type of the first target container; determining a container pose recognition algorithm according to the container type of the first target container, and recognizing pose information of the first target container based on the container pose recognition algorithm; and controlling the warehouse robot to pick up the first target container according to the pose information.

The determining a container pose recognition algorithm according to the container type of the first target container includes:
pre-establishing correspondences between each container types and each container pose recognition algorithms; and determining the container pose recognition algorithm for the first target container according to the correspondences and the container type of the first target container.

Optionally, according to a surface feature, the container types are divided into at least one of the following: a smooth surface type, a concave and convex surface type, and an identifier-pattern-on-surface type; or according to a size feature, the container types are divided into at least one of the following: large containers, standard containers, and small containers; or according to a material feature, the container types are divided into at least one of the following: paper containers and plastic containers.

Optionally, the determining a container pose recognition algorithm according to the container type includes:
determining that the container pose recognition algorithm for the first target container is a smooth surface type pose recognition algorithm when the container type of the first target container is the smooth surface type; and accordingly, the recognizing pose information of the first target container based on the smooth surface type pose recognition algorithm includes: obtaining a point cloud image and a preset reference image of the first target container;
registering the point cloud image and the preset reference image; and determining pose information of the first target container according to a registering result.

Optionally, the determining a container pose recognition algorithm according to the container type of the first target container, and recognizing pose information of the first target container based on the container pose recognition algorithm includes:
determining that the container pose recognition algorithm for the first target container is a concave and convex type pose recognition algorithm when the container type of the first target container is the concave and convex surface type; and accordingly, the recognizing pose information of the first target container based on the concave and convex type pose recognition algorithm includes: recognizing concave and convex parts of a surface of the first target container; and determine pose information of the first target container according to physical information of the concave and convex parts, where the physical information comprises one or more of length, width, height, depth, angle, and contour of the concave and convex parts, and the number of concave and convex parts.

Optionally, the determining a container pose recognition algorithm according to the container type of the first target container, and recognizing pose information of the first target container based on the container pose recognition algorithm includes:
determining that the container pose recognition algorithm for the first target container is an identifier-on-surface type pose recognition algorithm when the container type of the first target container is the identifier-pattern-on-surface type; and accordingly, the recognizing pose information of the first target container based on the identifier-on-surface type pose recognition algorithm includes: recognizing an identifier pattern of the first target container; and determining pose information of the first target container according to pose of the identifier pattern.

Optionally, before the recognizing pose information of the first target container based on the container pose recognition algorithm, the method further includes:
recognizing warehouse location identification information of a target warehouse location corresponding to the first target container; and
accordingly, the recognizing pose information of the first target container based on the container pose recognition algorithm includes: if the warehouse location identification information is successfully recognized, recognizing pose information of the first target container based on the container pose recognition algorithm.

Optionally, the container scheduling instruction further includes container position information of the first target container, and before the determining a container pose recognition algorithm according to the container type of the first target container, the method further includes:
moving the warehouse robot to a target position and moving a pickup apparatus of the warehouse robot to a set height according to the container position information.

Optionally, the container type of the first target container is the paper container, and the controlling a pickup apparatus of the warehouse robot to pick up the first target container includes:
obtaining a paper container pickup instruction;
controlling the pickup apparatus of the warehouse robot to pick up the first target container according to the paper container pickup instruction; where the paper container pickup instruction includes a pickup instruction of a first stage and a pickup instruction of a second stage; a pickup speed of the pickup instruction of the first stage is less than a pickup speed of the pickup instruction of the second stage; the first stage corresponds to a stage when the pickup apparatus does not touch the first target container; and the second stage corresponds to a stage when the pickup apparatus touches the first target container.

Optionally, the controlling the warehouse robot to pick up the first target container according to the pose information includes:
determining a position relation between the pickup apparatus of the warehouse robot and the first target container according to the pose information; moving and/or rotating the warehouse robot according to the position relation; and controlling the pickup apparatus of the warehouse robot to pick up the first target container.

Optionally, the pose information includes a distance between the first target container and the warehouse robot and size information and pose position information of the first target container; the container scheduling instruction further includes a standard size of the first target container; and the determining a position relation between the pickup apparatus of the warehouse robot and the first target container according to the pose information includes:
determining whether the first target container exists according to the distance; if yes, determining whether the first target container is valid according to the standard size and the size information of the first target container; and if yes, determining a position relation between the pickup apparatus of the warehouse robot and the first target container according to the pose information.

Optionally, after moving and/or rotating the warehouse robot according to the position relation, the method further includes:
obtaining a pickup distance between the warehouse robot and the first target container; determining whether the pickup distance meets a pickup condition of the warehouse robot; and if yes, controlling the pickup apparatus of the warehouse robot to pick up the first target container.

Optionally, the warehouse robot control method further includes:
obtaining a container storage instruction of a second target container, wherein the container storage instruction comprises a warehouse location position of a storage warehouse location corresponding to the second target container, and the second target container is located on the pickup apparatus of the warehouse robot; moving the warehouse robot to a storage position of the second target container according to the warehouse location position; obtaining a warehouse location identification information of the storage warehouse location; determining a second position relation between the warehouse robot and the storage warehouse location according to the warehouse location identification information of the storage warehouse location; moving and/or rotating the warehouse robot according to the second position relation; determining whether a third container exists on the storage warehouse location; and if not, storing the second target container on the storage warehouse location.

For a second aspect, the disclosure further provides a warehouse robot control apparatus, including:
a scheduling instruction obtaining module, configured to obtain a container scheduling instruction of a first target container, where the container scheduling instruction comprises a container type of the first target container; a container pose recognition module, configured to determine a container pose recognition algorithm according to the container type of the first target container, and recognize pose information of the first target container based on the container pose recognition algorithm; and a container pickup module, configured to control the warehouse robot to pick up the first target container according to the pose information.

The container pose recognition module includes:
a correspondence establishing unit, configured to pre-establish a correspondence between each container type and each container pose recognition algorithm; a pose recognition algorithm determining unit, configured to determine the container pose recognition algorithm for the first target container according to the correspondences and the container type of the first target container; and a container pose recognition unit, configured to recognize pose information of the first target container based on the container pose recognition algorithm.

Optionally, according to a surface feature, the container types are divided into at least one of the following: a smooth surface type, a concave and convex surface type, and an identifier-pattern-on-surface type; according to a size feature, it is divided into at least one of the following: large containers, standard containers, and small containers; and according to a material feature, the container types are divided into at least one of the following: paper containers and plastic containers.

Optionally, the pose recognition algorithm determining unit is further configured to:
determine that the container pose recognition algorithm for the first target container is a smooth surface type pose recognition algorithm when the container type of the first target container is the smooth surface type; and accordingly, the container pose recognition unit is further configured to: obtain a point cloud image and a preset reference image of the first target container; register the point cloud image and the preset reference image; and determine pose information of the first target container according to a registering result.

Optionally, the pose recognition algorithm determining unit is further configured to:
determine that the container pose recognition algorithm for the first target container is a concave and convex type pose recognition algorithm when the container type of the first target container is the concave and convex surface type; and accordingly, the container pose recognition unit is further configured to: recognize concave and convex parts of a surface of the first target container; and determine pose information of the first target container according to physical information of the concave and convex parts, where the physical information comprises one or more of length, width, height, depth, angle, and contour of the concave and convex parts, and the number of concave and convex parts.

Optionally, the pose recognition algorithm determining unit is further configured to:
determine that the container pose recognition algorithm for the first target container is an identifier-on-surface type pose recognition algorithm when the container type of the first target container is the identifier-pattern-on-surface type; and accordingly, the container pose recognition unit is further configured to: recognize an identifier pattern of the first target container; and determine pose information of the first target container according to pose of the identifier pattern.

Optionally, the warehouse robot control apparatus further includes:
a goods shelf identifier recognition module, configured to recognize warehouse location identification information of a target warehouse location corresponding to the first target container before recognizing the pose information of the first target container based on the container pose recognition algorithm; and accordingly, the container pose recognition module is further configured to determine a container pose recognition algorithm according to the container type of the first target container, and recognize pose information of the first target container based on the container pose recognition algorithm if the warehouse location identification information is successfully recognized.

Optionally, the container scheduling instruction further includes container position information of the first target container, and the warehouse robot control apparatus further includes:
a robot moving module, configured to move the warehouse robot to a target position and moving a pickup apparatus of the warehouse robot to a set height according to the container position information before determining the container pose recognition algorithm according to the container type of the first target container.

Optionally, the container pickup module includes:
a position relation determining unit, configured to determine a position relation between the pickup apparatus of the warehouse robot and the first target container according to the pose information; a robot moving unit, configured to move and/or rotate the warehouse robot according to the position relation; and a container pickup unit, configured to control the pickup apparatus of the warehouse robot to pick up the first target container.

Optionally, the container type of the first target container is the paper container, and the container pickup unit is further configured to:
obtain a paper container pickup instruction;
control the pickup apparatus of the warehouse robot to pick up the first target container according to the paper container pickup instruction; where the paper container pickup instruction includes a pickup instruction of a first stage and a pickup instruction of a second stage; a pickup speed of the pickup instruction of the first stage is less than a pickup speed of the pickup instruction of the second stage; the first stage corresponds to a stage when the pickup apparatus does not touch the first target container; and the second stage corresponds to a stage when the pickup apparatus touches the first target container.

Optionally, the pose information includes a distance between the first target container and the warehouse robot and size information and pose position information of the first target container; the container scheduling instruction further includes a standard size of the first target container; and the position relation determining unit is further configured to:
determine whether the first target container exists according to the distance; if yes, determine whether the first target container is valid according to the standard size and the size information of the first target container; and if yes, determine a position relation between the pickup apparatus of the warehouse robot and the first target container according to the pose information.

Optionally, the warehouse robot control apparatus further includes:
a distance determining module configured to obtain a pickup distance between the warehouse robot and the first target container after moving and/or rotating the warehouse robot according to the position relation; determine whether the pickup distance meets a pickup condition of the warehouse robot; and accordingly, the container pickup unit is further configured to control the pickup apparatus of the warehouse robot to pick up the first target container if the pickup distance meets the pickup condition of the warehouse robot.

Optionally, the warehouse robot control apparatus further includes:
a goods placing control module, configured to obtain a container storage instruction of a second target container, where the container storage instruction includes a warehouse location position of a storage warehouse location corresponding to the second target container, and the second target container is located on the pickup apparatus of the warehouse robot; move the warehouse robot to a storage position of the second target container according to the warehouse location position; obtain a warehouse location identification information of the storage warehouse location; determine a second position relation between the warehouse robot and the storage warehouse location according to the warehouse location identification information of the storage warehouse location; move and/or rotate the warehouse robot according to the second position relation; determine whether a third container exists on the storage warehouse location; and if not, store the second target container on the storage warehouse location.

For a third aspect not-according to the invention, the disclosure further provides a warehouse robot, which includes: a memory and at least one processor; the memory storing a computer-executable instruction; the at least one processor executing the computer-executable instruction stored in the memory, so that the at least one processor executes the warehouse robot control method provided by any embodiment of the disclosure.

For a fourth aspect not-according to the invention, the disclosure further provides a warehouse system, which includes a warehouse robot provided by an embodiment corresponding to the third aspect of the disclosure, goods shelves, and a warehouse management module, where the warehouse robot is connected to the warehouse management module to be moved to a target container, according to an instruction of the warehouse management module, and pick up and/or store a target container, where the target container is placed on the goods shelve and the target container is picked up.

For a fifth aspect not-according to the invention, the disclosure further provides a computer-readable storage medium, having a computer-executable instruction stored therein, wherein the computer-executable instruction, when executed by a processor, implements the warehouse robot control method provided by any embodiment of the disclosure.

For the warehouse robot control method and apparatus, robot, and warehouse system provided by the embodiments of the disclosure, according to the container position information in the container scheduling instruction, the warehouse robot is moved to the target position and the pickup apparatus thereof is moved to the set height; in addition, according to the container type in the container scheduling instruction, the container pose recognition algorithm corresponding thereto is determined to recognize its pose information, so as to pick up the container according to the pose information, so that automatic pickup of different types of containers, such as different sizes, materials, or shapes, is implemented, storage difficulty and costs of different types of goods are reduced, application range of the warehouse robot is improved, and in addition, the automation degree and efficiency of the warehouse system are improved.

### BRIEF DESCRIPTION OF THE DRAWINGS

The accompanying drawings, which are incorporated herein and constitute a part of the specification, illustrate embodiments consistent with the disclosure and, together with the specification, serve to explain the principles of the embodiments of the disclosure.
FIG. 1 is an application scene diagram of a warehouse robot control method provided by an embodiment of the disclosure.
FIG. 2 is a flowchart of a warehouse robot control method provided by an embodiment of the disclosure.
FIG. 3 is a flowchart of a warehouse robot control method provided by another embodiment of the disclosure.
FIG. 4 is a flowchart of step S304 in the embodiment shown in FIG. 3 of the disclosure.
FIG. 5 is a flowchart of step S306 in the embodiment shown in FIG. 3 of the disclosure.
FIG. 6 is a flowchart of step S308 in the embodiment shown in FIG. 3 of the disclosure.
FIG. 7 is a flowchart of a warehouse robot control method provided by a further embodiment of the disclosure.
FIG. 8 is a flowchart of step S411 in the embodiment shown in FIG. 7 of the disclosure.
FIG. 9 is a flowchart of a warehouse robot control method provided by another embodiment of the disclosure.
FIG. 10 is a structural schematic diagram of a warehouse robot control apparatus provided by an embodiment of the disclosure.
FIG. 11 is a schematic structural diagram of a warehouse robot provided by an embodiment of the disclosure.
FIG. 12 is a schematic structural diagram of a warehouse system provided by an embodiment of the disclosure.

Explicit embodiments of the disclosure are shown by the aforementioned accompanying drawings, and details may be described below. These drawings and descriptions are not intended to limit in any way the scope of the ideas of the disclosure, but rather to illustrate the concepts of the disclosure by reference to specific embodiments for persons skilled in the art.

### DETAILED DESCRIPTION

Exemplary embodiments may be explained in detail herein, and are exemplarily represented in the accompanying drawings. When the descriptions below relate to the drawings, unless otherwise indicated, the same number in different accompanying drawings represents same or similar elements. Implementations described in the exemplary embodiments below do not represent all implementations consistent with the disclosure. On the contrary, they are only examples of apparatuses and methods consistent with some aspects of the disclosure that are detailed in the appended claims.

The technical solutions of the disclosure and how the technical solutions of the disclosure solve the above-mentioned technical problems are explained in detail in the following specific embodiments. The following specific embodiments may be combined with each other, and the same or similar concepts or processes may not be repeated in some embodiments. The embodiments of the disclosure will be described below in conjunction with the drawings.

The application scenes of the embodiments of the disclosure will be described:

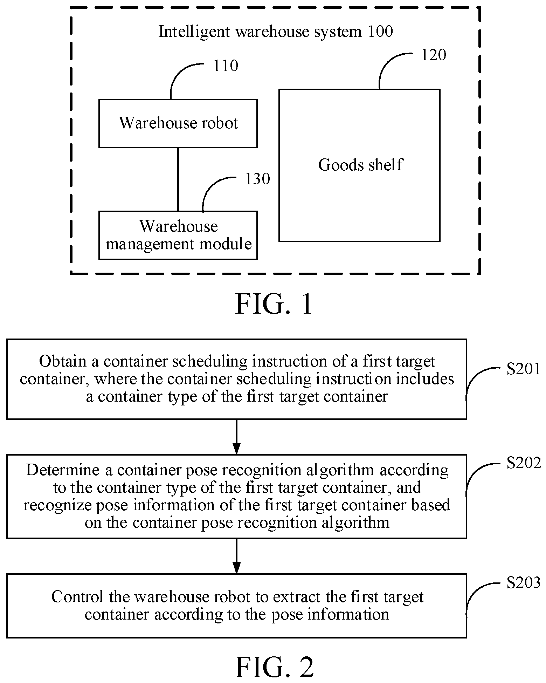

FIG. 1 is an application scene diagram of a warehouse robot control method provided by an embodiment of the disclosure. As shown in FIG. 1, an intelligent warehouse system 100 adopts a warehouse robot 110 for pickup and storage of the target container on the good shelves 120 and adopts a warehouse management module 130 to control the warehouse robot 110 to move to a set position for the pickup and storage of the target container. The warehouse management module 130 further stores storage information of each warehouse location of the goods shelves 120 and basic information of the target container, to facilitate warehouse management.

In the scene of picking up the target container through the warehouse robot, the warehouse robot in the intelligent warehouse system provided by the prior art only can automatically pick up exactly the same container; however, there will be cases that the type of the target container is different in actual applications, for example, inconsistent size dimension, inconsistent shapes, inconsistent materials, etc.; for the existing warehouse system, it is often necessary to add additional standard containers for storage, which increases the cost of warehousing and simultaneously reduces the efficiency of goods storage and pickup. The existing warehouse system cannot directly and automatically pick up containers with different container types. To solve this problem, in the warehouse robot control method provided by the embodiment of the disclosure, for the warehouse system including multiple types of containers, according to the container type of the containers, the corresponding recognition algorithm is determined to recognize the pose information of the container, so that the warehouse robot can automatically pick up different types of containers according to the pose information, which improves the application range of the warehouse robot and the intelligence degree, automation degree, and efficiency of the warehouse system.

FIG. 2 is a flowchart of a warehouse robot control method provided by an embodiment of the disclosure. The warehouse robot control method can be executed by the warehouse robot, warehouse system, processor, server, or the like. As shown in FIG. 2, the warehouse robot control method provided by this embodiment includes the following steps:
Step S201: obtain a container scheduling instruction of a first target container, where the container scheduling instruction includes a container type of the first target container.

Specifically, the first target container can be any one or more containers in the warehouse of the warehouse system, which can be determined by the container scheduling instruction. The container scheduling instructions can be issued by the warehouse management module of the warehouse system, or instructions entered by a relevant operator through an operation interface. The container type can be determined by aspects such as the size, contour, material, and surface feature of the container. The surface feature can include, for example, surface texture, color, whether including an identifier pattern, whether including a bump or depression, etc.

Specifically, the container scheduling instruction may further include the container position information of the first target container; the container position information may be the warehouse location serial number or warehouse location coordinate value where the first target container is located.

Furthermore, according to the size, the container type may be divided into large containers, standard containers, and small containers; and according to the contour, it can be divided into regular contour type containers and irregular contour type containers, for example, cuboid containers are regular contour type, while those with bumps or depressions on the surfaces are irregular contour type; the irregular contour type containers can also be subdivided into concave contour type containers and convex contour type containers; moreover, according to materials, it can also be divided into plastic type containers, paper type containers, and the like; according to the surface feature, it can also be divided into identifier-pattern-on-surface type containers and identifier-free-on-surface type containers.

Specifically, each container type can be provided with a corresponding type serial number, so as to determine type of the first target container according to the serial number. It can be described by four hexadecimal codes, for example, 2010; the first one is used for describing a size parameter, and 2 can represent large containers. The second one is used for describing a contour parameter, and 0 can represent the regular contour container. The third one is used for describing a material parameter, and 1 represents plastic containers. The fourth one is used for describing a surface feature parameter, and 0 can represent the identifier-free-on-surface type containers. That is, 2010 means that the first target container is a large plastic container without surface identifier and with a regular contour.

Certainly, the type of the containers can also be divided from other aspects, or the type of the containers can be described in other ways, such as using decimal code, string, etc., which is not limited by the disclosure.

As an example, the container scheduling instruction can be "1, N0053, 3", where the first parameter 1 indicates that an action corresponding to the instruction is pickup, and 0 can indicate storage. The second parameter indicates a warehouse location serial number. The third parameter indicates that the type of the target container is 3. The specific content of the instruction is: picking up a container with a warehouse location serial number of N0053, and the container type is 3.

Furthermore, the container scheduling instruction can also include the size information of the first target container, the weight, the type of goods loaded, and other information, and the size information includes the length, width, and height.

Step S202: determine a container pose recognition algorithm according to the container type of the first target container, and recognize pose information of the first target container based on the container pose recognition algorithm.

The pose information can include the pose position information and size information of the first target container, such as the size of the first target container, angle and depth of the first target container with respect to the pickup apparatus, and other information.

Specifically, different container pose recognition algorithms can be designed for different container types, so as to determine the container pose recognition algorithm corresponding thereto according to the container type.

The determining a container pose recognition algorithm according to the container type of the first target container includes:
pre-establishing correspondences between each container types and each container pose recognition algorithms; and determining the container pose recognition algorithm for the first target container according to the correspondences and the container type of the first target container.

Specifically, the container pose recognition algorithm can identify the pose information of the first target container by identifying the number and position relation of the preset key points of the first target container or a graph composed of the key points. The identification information of the first target container can also be recognized based on a deep learning algorithm, and the pose information of the first target container can be determined according to the identification information.

Step S203: control the warehouse robot to pick up the first target container according to the pose information.

Specifically, after determining the pose information of the first target container, the position of the warehouse robot and the position or angle of the pickup apparatus can be adjusted according to the pose information. After the adjustment is completed, the first target container is picked up through the pickup apparatus.

Specifically, when adjusting the position of the warehouse robot and the position or angle of the pickup apparatus according to the pose information, the center of the pickup apparatus should be aligned with the center of the first target container.

For the warehouse robot control method provided by the embodiments of the disclosure, according to the container position information in the container scheduling instruction, the warehouse robot is moved to the target position and the pickup apparatus thereof is moved to the set height; in addition, according to the container type in the container scheduling instruction, the container pose recognition algorithm corresponding thereto is determined to recognize its pose information, so as to pick up the container according to the pose information, so that automatic pickup of different types of containers, such as different sizes, materials, or shapes, is implemented, pickup costs of different types of goods are reduced, application range of the warehouse robot is improved, and in addition, the automation degree and efficiency of the goods pickup are improved.

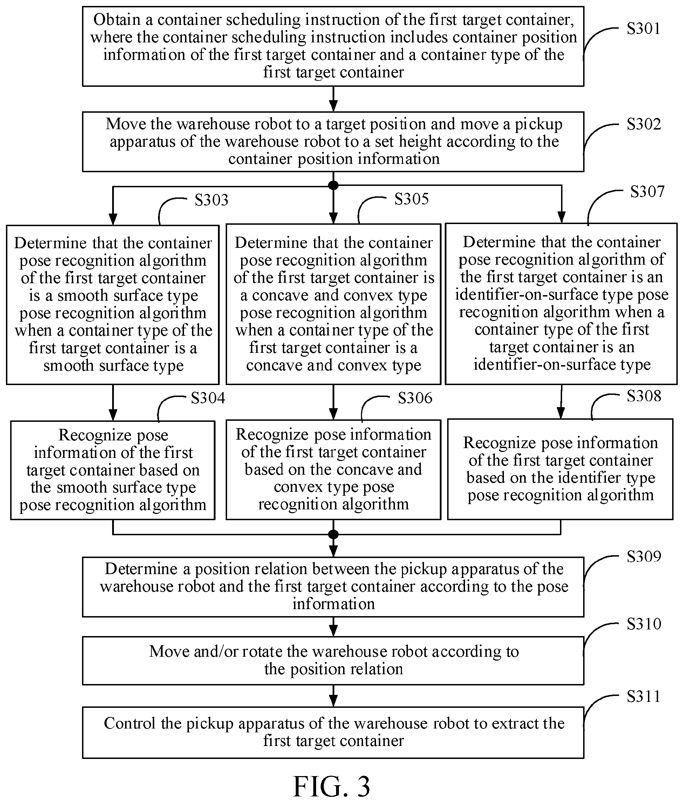

FIG. 3 is a flowchart of a warehouse robot control method provided by another embodiment of the disclosure. As shown in FIG. 3, the warehouse robot control method provided by this embodiment subdivides steps S202 and S203 based on the warehouse robot control method provided by the embodiment shown in FIG. 2, and adds the steps of moving the warehouse robot and goods shelf identifier recognition after step S201; the warehouse robot control method provided by this embodiment may include the following steps:
Step S301: obtain a container scheduling instruction of a first target container, where the container scheduling instruction includes container position information of the first target container and a container type of the first target container.

Optionally, according to a surface feature, the container types are divided into at least one of the following: a smooth surface type, a concave and convex surface type, and an identifier-pattern-on-surface type; according to a size feature, it is divided into at least one of the following: large containers, standard containers, and small containers; and according to a material feature, the container types are divided into at least one of the following: paper containers and plastic containers.

Specifically, the containers of smooth surfaces type means that the surface of the container has no identifier pattern and no bumps or depressions, for example, a cuboid container with smooth surface and no identifier pattern. The containers of identifier patterns on surfaces type means that the surface of the container includes one or more identifier patterns or the identifier pattern or shape composed of multiple key points; the identifier patterns may be bar codes, two-dimensional codes, product identifiers, product codes, etc.; the identifier patterns may also be text, numbers, special symbols, and other information. The containers of concave and convex surfaces type means that the surface of the container has bumps or depressions, i.e., a curved face exists on the surface of the container, for example, a concave surface or a convex surface.

Step S302: move the warehouse robot to a target position and move a pickup apparatus of the warehouse robot to a set height according to the container position information.

The pickup apparatus may be a goods fork, mechanical arm, clamping apparatus, etc., to pick up or clamp the container.

Specifically, the container position information may be coordinate information of the warehouse location for placing the first target container, for example, (2, 3, 5), which means that the warehouse location at line 3, column 5 of the second goods shelf in the warehouse. Furthermore, the warehouse robot is moved to a target column of the target goods shelf corresponding to the coordinate information according to the coordinate information according to the target line of the target goods shelf corresponding to the coordinate information, the pickup apparatus of the warehouse robot is moved to the set height.

Furthermore, the warehouse robot further includes a path planning module; after receiving the container position information, it can automatically cruise to the target position corresponding to the container position information, and move the pickup apparatus to the set height.

Furthermore, after moving the pickup apparatus to the set height, it may further include: rotating the pickup apparatus to a direction facing the first target container, or during a process of moving the pickup apparatus to the set height, rotating the pickup apparatus to a direction facing the first target container.

Step S303: determine that the container pose recognition algorithm for the first target container is a smooth surface type pose recognition algorithm when the container type of the first target container is the smooth surface type.

Step S304: recognize pose information of the first target container based on the smooth surface type pose recognition algorithm.

Specifically, the smooth surface type pose recognition algorithm may be a laser ranging based recognition algorithm, i.e., through scanning the distance of each key point of the first target container by the laser, the distance can be obtained by moving the warehouse robot left and right, and the pose information of the first target container is determined according to the distance of each key point.

Specifically, the smooth surface type pose recognition algorithm may be a point cloud data-based recognition algorithm, i.e., through a laser radar, collecting point cloud data of front face of the first target container, where the point cloud data can be obtained by moving the laser radar mounted at the pickup apparatus, recognizing the key point in the point cloud data, and determining the pose information of the first target container according to the coordinate information of each key point. Furthermore, association information of each key point can be determined according to the coordinate information of each key point, and the pose information of the first target container is determined according to the size information of the first target container in the container scheduling instruction.

Furthermore, the contour of the first target container can also be recognized according to the point cloud data, for example, the contour line segment, and the pose position information of the warehouse robot with respect to the first target container is determined according to the contour.

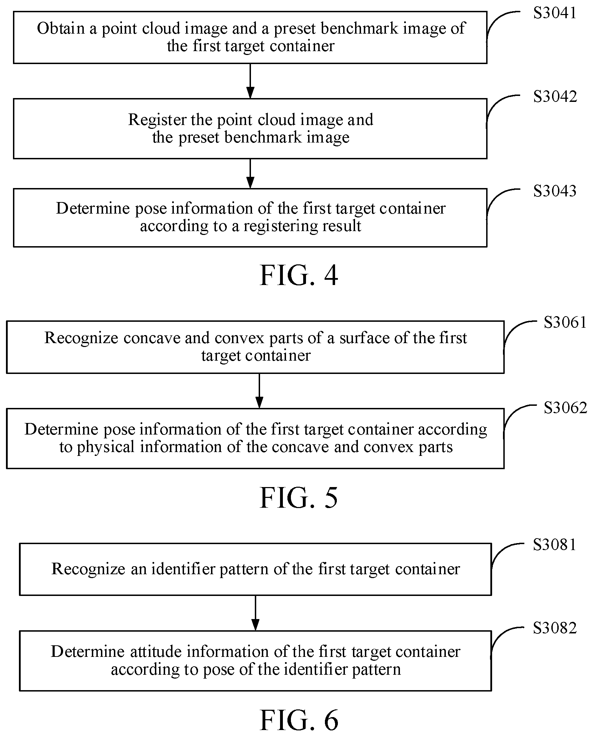

Optionally, FIG. 4 is a flowchart of step S304 in the embodiment shown in FIG. 3 of the disclosure. As shown in FIG. 4, step S304 includes the following steps:
Step S3041: obtain a point cloud image and a preset reference image of the first target container.

The point cloud image can also be referred to as point cloud data, and can be collected by a radar or a depth camera. It may also be the point cloud data of an entire container or a specific region of the first target container. The preset reference image may be an image collected or photographed of the first target container during entering storage.

Step S3042: register the point cloud image and the preset reference image.

Specifically, the point cloud image and the preset reference image can be registered based on the preset key point. The key point may be each vertex or may also be the center of the first target container.

Step S3043: determine pose information of the first target container according to a registering result.

Specifically, according to the registering result, the placing angle, depth, and other information of the first target container can be determined.

Step S305: determine that the container pose recognition algorithm for the first target container is a concave and convex type pose recognition algorithm when the container type of the first target container is the concave and convex surface type.

Step S306: recognize pose information of the first target container based on the concave and convex type pose recognition algorithm.

Specifically, the pose information of the first target container can be determined according to the height, length, width, number, shape, angle and other information of an edge by identifying information of the edge of a convex part.

Optionally, FIG. 5 is a flowchart of step S306 in the embodiment shown in FIG. 3 of the disclosure. As shown in FIG. 5, step S306 includes the following steps:
Step S3061: recognize concave and convex parts of a surface of the first target container.

Specifically, the point cloud data of the first target container can be collected, and the concave and convex parts of the first target container can be recognized according to the coordinate information of the point cloud data. The image information of each angle of the first target container can photographed, so that the concave and convex parts of the surface of the first target container can be recognized according to the image information of each angle.

Step S3062: determine pose information of the first target container according to physical information of the concave and convex parts.

The physical information comprises one or more of length, width, height, depth, angle, and contour of the concave and convex parts, and the number of concave and convex parts.

Step S307: determine that the container pose recognition algorithm for the first target container is an identifier-on-surface type pose recognition algorithm when the container type of the first target container is the identifier-pattern-on-surface type.

Step S308: recognize pose information of the first target container based on the identifier type pose recognition algorithm.

Optionally, FIG. 6 is a flowchart of step S308 in the embodiment shown in FIG. 3 of the disclosure. As shown in FIG. 6, step S308 includes the following steps:
Step S3081: recognize an identifier pattern of the first target container.

Specifically, the identifier pattern of the first target container can be recognized based on the deep learning algorithm, a Speed Up Robust Feature (SURF) algorithm, or other algorithms.

Step S3082: determine pose information of the first target container according to pose of the identifier pattern.

Specifically, the container scheduling instruction can also include a pre-input standard identifier of the identifier pattern, and the pose of the identifier pattern can be determined through the standard identifier and the recognized identifier pattern.

Furthermore, when the container scheduling instruction does not include the container material feature, i.e., it does not indicate that the first target container is a paper container or a plastic container, the image of the first target container can also be obtained; according to the image of the first target container, the color and/or texture of the first target container are recognized; according to the color and/or texture, whether its container type thereof is the paper container or plastic container is determined.

Furthermore, when the container type of the first target container is the large container, a standard container, or a small container, feature pickup or image recognition of the preset region of the image of the first target container can be conducted to determine the size information and pose position information of the first target container, i.e., the pose information. The preset region may be a region of a middle set range of the image.

Step S309: determine a position relation between the pickup apparatus of the warehouse robot and the first target container according to the pose information;
The position relation is a relative position of the two, including a relative angle and a relative distance.

Specifically, according to the pose information of the first target container, a current placement angle of the first target container and the distance to the warehouse robot can be determined, and the size of the first target container can also be obtained. Then, according to the placement angle of the first target container and the distance to the warehouse robot, the relative angle and relative distance between the pickup apparatus of the warehouse robot and the first target container can be determined.

Step S310: move and/or rotate the warehouse robot according to the position relation.

The warehouse robot and the pickup apparatus thereof are connected by a connection part, and the pickup apparatus can be moved or rotated by moving or rotating the warehouse robot.

Specifically, the warehouse robot is rotated according to the relative angle and the warehouse robot is moved according to the relative distance.

Furthermore, the standard distance and standard angle of the warehouse robot can also be obtained, the warehouse robot is rotated according to the comparison result between the relative angle and the standard angle, and the warehouse robot is moved according to the comparison result between the relative distance and the standard distance.

Step S311: control the pickup apparatus of the warehouse robot to pick up the first target container.

Specifically, the warehouse robot can control its pickup apparatus to pick up the first target container by sending a pickup instruction to the warehouse robot.

Furthermore, the pickup instruction can limit the speed of the pickup apparatus in the first stage to be relatively low, while the speed of the second stage is relatively high during pickup by the pickup apparatus. The first stage is a stage when the pickup apparatus does not touch the first target container; and the second stage is a stage when the pickup apparatus touches the first target container. An advantage of this setting is that for paper containers, it avoids the damage of the container caused by the pickup apparatus rushing to the paper container at a high speed, and improves the life of the container.

In this embodiment, for three types of containers, i.e., the smooth surface type, concave and convex surface type, identifier-pattern-on-surface type, three different container pose recognition algorithms are provided. Based on the algorithms, the pose information of the container of the corresponding type can be automatically recognized, so as to implement the automatic pickup of the different types of containers according to the pose information, which reduces the costs of pickup of different types of goods, improves the application range of the warehouse robot, and simultaneously improves the automation degree and efficiency of the goods pickup.

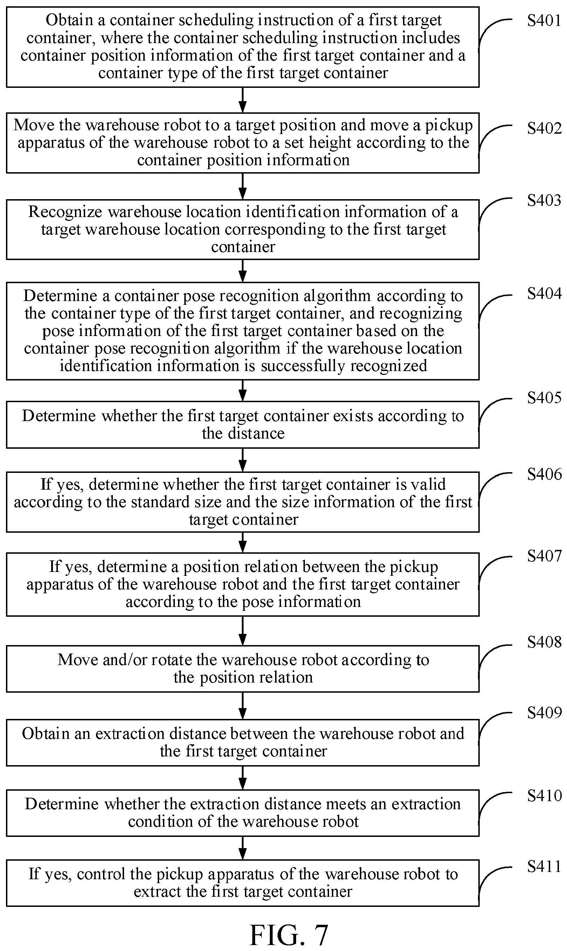

FIG. 7 is a flowchart of a warehouse robot control method provided by a further embodiment of the disclosure. On the basis of warehouse robot control method provided by the embodiment shown in FIG. 3, the warehouse robot control method provided by this embodiment further subdivides step S309, adds a step of goods shelf identifier recognition after step S302, and adds the determining of the pickup distance after step S310; as shown in FIG. 7, the warehouse robot control method includes the following steps:
Step S401: obtain a container scheduling instruction of a first target container, where the container scheduling instruction includes container position information of the first target container and a container type of the first target container.
Step S402: move the warehouse robot to a target position and move a pickup apparatus of the warehouse robot to a set height according to the container position information.
Step S403: recognize warehouse location identification information of a target warehouse location corresponding to the first target container.

The warehouse location identification information can be the bar code, two-dimensional code, etc., and can also be the label, serial number, or sequence number of the target warehouse location.

Specifically, recognition can be executed based on the image recognition algorithm, and the warehouse location identification information can also be recognized based on radio frequency technology, infrared technology, etc.

Specifically, the warehouse location identification information of the target warehouse location corresponding to the first target container can be obtained first, and then the warehouse location identification information is recognized.

Step S404: determine a container pose recognition algorithm according to the container type of the first target container, and recognizing pose information of the first target container based on the container pose recognition algorithm if the warehouse location identification information is successfully recognized.

The pose information includes a distance between the first target container and the warehouse robot and size information and pose position information of the first target container; the container scheduling instruction further includes a standard size of the first target container.

Furthermore, if the recognition fails, within a set amplitude, the pickup apparatus of the warehouse robot is moved, and the recognition of step S403 is repeated again. The upper limit value of the repeating times can be set; if reaching the upper limit value but no identification succeeds, the warehouse robot is recovered to the standby state, and prompt information for failing the reading the warehouse location identification information is generated.

Specifically, the recognition failure includes two cases, one is that the target warehouse location is not set with the warehouse location identification information, and the other one is that the target warehouse location is set with the warehouse location identification information, but the warehouse location identification information is invalid. If the warehouse robot can collect the warehouse location identification information in step S403 but cannot recognize the information, the current recognition failure case is the second one, while if the warehouse location identification information cannot be collected, the current recognition failure case is the first one.

By adding the step of goods shelf identification recognition, the accuracy of the goods picked up is effectively guaranteed.

Step S405: determine whether the first target container exists according to the distance.

Specifically, whether the first target container exists is determined according to a comparison result between the distance between the first target container and the warehouse robot and a preset distance threshold. If the distance is greater than the preset distance threshold, it indicates that the first target container is not placed on the target warehouse location, i.e., not existing, and if less, it represents existence. The preset distance threshold can be set according to the depth of the warehouse position.

Furthermore, this step can also be replaced by: according to the collected first target container image, which may be an image collected by a 2D camera or may also be a point cloud image collected by the depth camera, by recognizing whether the image preset position has the container, whether the first target container exists can be determined.

Step S406: if yes, determine whether the first target container is valid according to the standard size and the size information of the first target container.

Specifically, if the size information is greatly different from the standard size, for example, greater than a preset error, it indicates that the first target container is invalid, i.e., the current first target container is not the container specified in the container scheduling instruction.

Step S407: if yes, determine a position relation between the pickup apparatus of the warehouse robot and the first target container according to the pose information.

If the first target container is invalid, it indicates that the first target container does not match with the container scheduling instruction, and then the warehouse robot is controlled to enter a standby mode. When the first target container is invalid, container mismatching prompt information can also be generated so as to facilitate verification of the first target container.

By further determining whether the first target container picked up exists and whether it is a valid container, the correctness of the container picked up is further guaranteed, and a phenomenon of a goods distribution error caused by a goods pickup error due to misplacement or system information registration errors is avoided.

Step S408: move and/or rotate the warehouse robot according to the position relation.

Step S409: obtain a pickup distance between the warehouse robot and the first target container.

Specifically, the pickup distance between the warehouse robot and the first target container can be obtained based on the depth camera or radar.

Step S410: determine whether the pickup distance meets a pickup condition of the warehouse robot.

The pickup condition refers to the condition that needs to be satisfied by the pickup apparatus of the warehouse robot to carry out the pickup, which can be the minimum distance threshold of the pickup distance.

By determining the pickup distance, it effectively avoids the occurrence of the case that the pickup apparatus of the warehouse robot, for example, the goods fork, hits the shelf when it is extended to pick up goods, and ensures the safety of a pickup action.

Step S411: if yes, control the pickup apparatus of the warehouse robot to pick up the first target container.

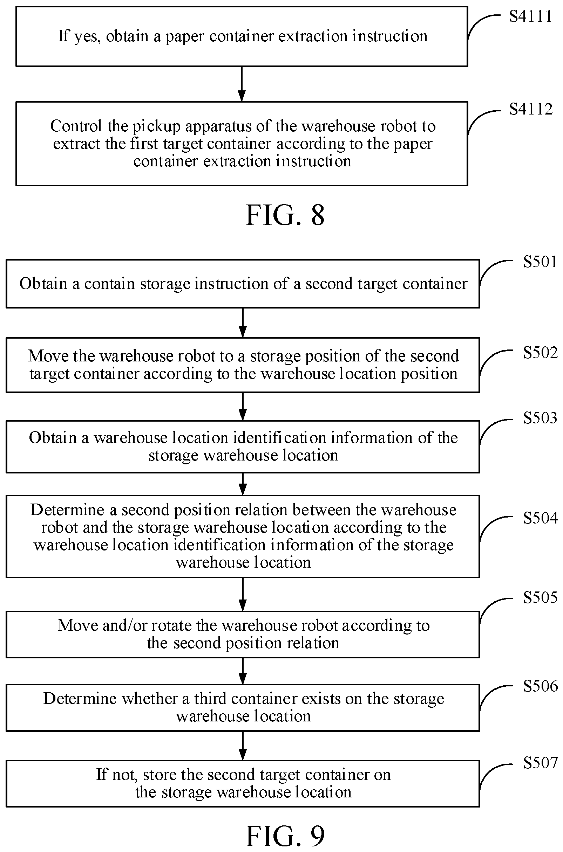

FIG. 8 is a flowchart of step S411 in the embodiment shown in FIG. 7 of the disclosure. The container type of the first target container of this embodiment is a paper container. As shown in FIG. 8, step S411 includes the following steps:
Step S4111: if yes, obtain a paper container pickup instruction.
Step S4112: control the pickup apparatus of the warehouse robot to pick up the first target container according to the paper container pickup instruction.

The paper container pickup instruction includes a pickup instruction of a first stage and a pickup instruction of a second stage; a pickup speed of the pickup instruction of the first stage is less than a pickup speed of the pickup instruction of the second stage; the first stage corresponds to a stage when the pickup apparatus does not touch the first target container; and the second stage corresponds to a stage when the pickup apparatus touches the first target container.

Furthermore, if not met, the warehouse robot is adjusted according to the pickup distance and pickup condition, so that the pickup distance meets the pickup condition of the warehouse robot. An upper limit value of the adjusting times can also be set; if the pickup distance cannot meet the pickup condition of the warehouse robot in this upper limit value, the warehouse robot is recovered into a standby state.

In this embodiment, the accuracy of the container picked up is ensured by recognizing the target warehouse location and determining the existence and validity of the first target container. By determining whether the pickup distance meets the pickup condition before pickup, the safety of the pickup action is improved, and the occurrence of the phenomenon of hitting the goods shelf by the pickup apparatus is effectively avoided.

FIG. 9 is a flowchart of a warehouse robot control method provided by another embodiment of the disclosure. On the basis of the warehouse robot control method provided by the embodiments of FIG. 2 to FIG. 8, in the warehouse robot control method provided by this embodiment, after picking up the first target container, during picking up the first target container, or before picking up the first target container, a second target container storage step is added, as shown in FIG. 9. The second target container storage specifically includes the following steps:
Step S501: obtain a contain storage instruction of a second target container.

The container storage instruction comprises a warehouse location position of a storage warehouse location corresponding to the second target container, and the second target container is located on the pickup apparatus of the warehouse robot.

The warehouse robot mentioned in this embodiment may be the same warehouse robot as the warehouse robot in the container pickup embodiment (the embodiment corresponding to FIG. 2 to FIG. 7), or it may also be a different warehouse robot.

Specifically, the second target container may be the same container as the first target container and may also be a different container.

Step S502: move the warehouse robot to a storage position of the second target container according to the warehouse location position.

Step S503: obtain a warehouse location identification information of the storage warehouse location.

The storage warehouse location may be the same warehouse location as the target warehouse location in the embodiment above and may also be a different warehouse location of the same warehouse.

Step S504: determine a second position relation between the warehouse robot and the storage warehouse location according to the warehouse location identification information of the storage warehouse location.

Step S505: move and/or rotate the warehouse robot according to the second position relation.

Step S506: determine whether a third container exists on the storage warehouse location.

Step S507: if not, store the second target container on the storage warehouse location.

In this embodiment, the second target container storage step is added, specifically, it is: according to the warehouse location position in the container storage instruction, moving the warehouse robot; recognizing the warehouse location identification information, to determine the position relation between the storage warehouse location and the warehouse robot; automatically adjusting the robot based on the position relation; after adjustment is completed, determining whether the storage warehouse location has other containers; if not, performing automatic storage of the second target container, which implements automatic storage of the container by the warehouse robot, improves the automation degree and efficiency of the container storage, and reduces the labor cost.

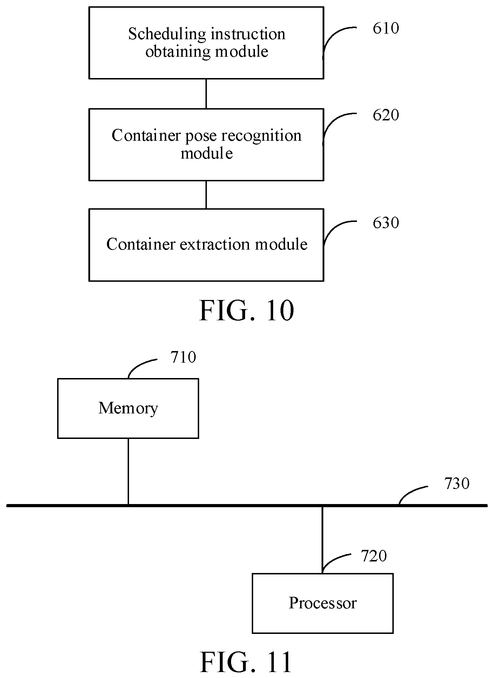

FIG. 10 is a structural schematic diagram of a warehouse robot control apparatus provided by an embodiment of the disclosure. As shown in FIG. 10, the warehouse robot control apparatus provided by this embodiment includes: a scheduling instruction obtaining module 610, a container pose recognition module 620, and a container pickup module 630.

The scheduling instruction obtaining module 610 is configured to obtain a container scheduling instruction of a first target container, where the container scheduling instruction comprises a container type of the first target container; the container pose recognition module 620 is configured to determine a container pose recognition algorithm according to the container type of the first target container, and recognize pose information of the first target container based on the container pose recognition algorithm; and the container pickup module 630 is configured to control the warehouse robot to pick up the first target container according to the pose information.

The container pose recognition module 620 includes:
a correspondence establishing unit, configured to pre-establish a correspondence between each container type and each container pose recognition algorithm; a pose recognition algorithm determining unit, configured to determine the container pose recognition algorithm for the first target container according to the correspondences and the container type of the first target container; and a container pose recognition unit, configured to recognize pose information of the first target container based on the container pose recognition algorithm.

Optionally, according to a surface feature, the container types are divided into at least one of the following: a smooth surface type, a concave and convex surface type, and an identifier-pattern-on-surface type.

Optionally, the pose recognition algorithm determining unit is further configured to:
determine that the container pose recognition algorithm for the first target container is a smooth surface type pose recognition algorithm when the container type of the first target container is the smooth surface type; and accordingly, the container pose recognition unit is further configured to: obtain a point cloud image and a preset reference image of the first target container; register the point cloud image and the preset reference image; and determine pose information of the first target container according to a registering result.

Optionally, the pose recognition algorithm determining unit is further configured to:
determine that the container pose recognition algorithm for the first target container is a concave and convex type pose recognition algorithm when the container type of the first target container is the concave and convex surface type; and accordingly, the container pose recognition unit is further configured to: recognize concave and convex parts of a surface of the first target container; and determine pose information of the first target container according to physical information of the concave and convex parts, where the physical information comprises one or more of length, width, height, depth, angle, and contour of the concave and convex parts, and the number of concave and convex parts.

Optionally, the pose recognition algorithm determining unit is further configured to:
determine that the container pose recognition algorithm for the first target container is an identifier-on-surface type pose recognition algorithm when the container type of the first target container is the identifier-pattern-on-surface type; and accordingly, the container pose recognition unit is further configured to: recognize an identifier pattern of the first target container; and determine pose information of the first target container according to pose of the identifier pattern.

Optionally, the warehouse robot control apparatus further includes:
a goods shelf identifier recognition module, configured to recognize warehouse location identification information of a target warehouse location corresponding to the first target container before recognizing the pose information of the first target container based on the container pose recognition algorithm; and accordingly, the container pose recognition module is further configured to determine a container pose recognition algorithm according to the container type of the first target container, and recognize pose information of the first target container based on the container pose recognition algorithm if the warehouse location identification information is successfully recognized.

Optionally, the container scheduling instruction further includes container position information of the first target container, and the warehouse robot control apparatus further includes:
a robot moving module, configured to move the warehouse robot to a target position and moving a pickup apparatus of the warehouse robot to a set height according to the container position information before determining the container pose recognition algorithm according to the container type of the first target container.

Optionally, the container pickup module 630 includes:
a position relation determining unit, configured to determine a position relation between the pickup apparatus of the warehouse robot and the first target container according to the pose information; a robot moving unit, configured to move and/or rotate the warehouse robot according to the position relation; and a container pickup unit, configured to control the pickup apparatus of the warehouse robot to pick up the first target container.

Optionally, the container type of the first target container is the paper container, and the container pickup unit is further configured to:
obtain a paper container pickup instruction; control the pickup apparatus of the warehouse robot to pick up the first target container according to the paper container pickup instruction; where the paper container pickup instruction includes a pickup instruction of a first stage and a pickup instruction of a second stage; a pickup speed of the pickup instruction of the first stage is less than a pickup speed of the pickup instruction of the second stage; the first stage corresponds to a stage when the pickup apparatus does not touch the first target container; and the second stage corresponds to a stage when the pickup apparatus touches the first target container.

Optionally, the pose information includes a distance between the first target container and the warehouse robot and size information and pose position information of the first target container; the container scheduling instruction further includes a standard size of the first target container; and the position relation determining unit is further configured to:
determine whether the first target container exists according to the distance; if yes, determine whether the first target container is valid according to the standard size and the size information of the first target container; and if yes, determine a position relation between the pickup apparatus of the warehouse robot and the first target container according to the pose information.

Optionally, the warehouse robot control apparatus further includes:
a distance determining module configured to obtain a pickup distance between the warehouse robot and the first target container after moving and/or rotating the warehouse robot according to the position relation; determine whether the pickup distance meets a pickup condition of the warehouse robot; and accordingly, the container pickup unit is further configured to control the pickup apparatus of the warehouse robot to pick up the first target container if the pickup distance meets the pickup condition of the warehouse robot.

Optionally, the warehouse robot control apparatus further includes:
a goods placing control module, configured to obtain a container storage instruction of a second target container, where the container storage instruction includes a warehouse location position of a storage warehouse location corresponding to the second target container, and the second target container is located on the pickup apparatus of the warehouse robot; move the warehouse robot to a storage position of the second target container according to the warehouse location position; obtain a warehouse location identification information of the storage warehouse location; determine a second position relation between the warehouse robot and the storage warehouse location according to the warehouse location identification information of the storage warehouse location; move and/or rotate the warehouse robot according to the second position relation; determine whether a third container exists on the storage warehouse location; and if not, store the second target container on the storage warehouse location.

FIG. 11 is a schematic structural diagram of a warehouse robot provided by an embodiment of the disclosure. As shown in FIG. 11, the warehouse robot includes a memory 710, a processor 720, and a computer program.

The computer program is stored in the memory 710 and is configured to be executed by the processor 720 to implement the warehouse robot control method provided by any embodiment corresponding to FIG. 2 to FIG. 9 of the disclosure.

The memory 710 and the processor 720 are connected through a bus 730.

Relevant explanations may refer to the relevant descriptions and effects corresponding to steps in FIG. 2 to FIG. 9 for understanding; this is omitted herein for conciseness.

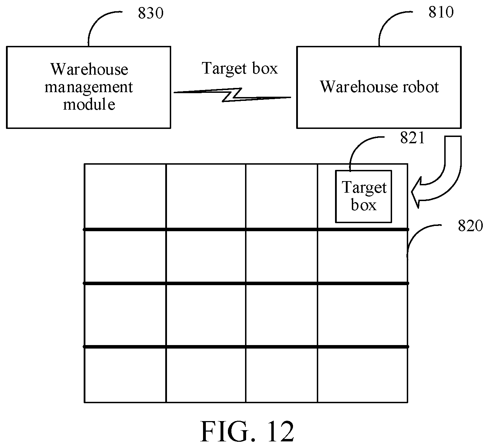

FIG. 12 is a schematic structural diagram of a warehouse system provided by an embodiment of the disclosure. As shown in FIG. 12, the warehouse system includes a warehouse robot 810, goods shelves 820, and a warehouse management module 830.

The target container 821 is placed on the goods shelf 820 or needs to be placed on the goods shelf 820. The warehouse robot 810 is the warehouse robot provided by the embodiment corresponding to FIG. 11 of the disclosure. The warehouse robot 810 is connected to the warehouse management module 830 for receiving an instruction of the warehouse management module, where the instruction may include information of the target contained needing to be picked up or stored; according to the instruction of the warehouse management module 830, it is moved to the set position and pickup and/or storage of the target container are performed.

An embodiment of the disclosure provides a computer-readable storage medium, having a computer program stored thereon, the computer program, when executed by a processor, implementing the warehouse robot control method provided by any one of the embodiments corresponding to FIG. 2 to FIG. 9 of the disclosure.

The computer-readable storage medium can be ROM, random access memory (RAM), CD-ROM, tape, floppy disk, optical data storage device, and the like.

In several embodiments provided in the disclosure, it should be understood that, the disclosed apparatus and method may be implemented in another manner. For example, the apparatus embodiments described above are merely exemplary. For example, the division of the modules is merely the division of logic functions, and may use other division manners during actual implementation. For example, a plurality of modules or components may be combined, or may be integrated into another system, or some features may be omitted or not performed. In addition, the coupling, or direct coupling, or communication connection between the displayed or discussed components may be the indirect coupling or communication connection through some interfaces, apparatus, or modules, and may be electrical, mechanical or of other forms.

After considering the description and practicing the invention disclosed herein, a person skilled in the art may easily conceive of other implementations of the disclosure. The disclosure aims at covering any variation, usage, or adaptive change of the disclosure; these variations, usages, or adaptive changes follow a general principle of the disclosure and include the common knowledge or common technical means in this technical field that are not disclosed in the disclosure. The description and embodiments are merely considered as exemplary, and the scope of the invention is pointed out in the following claims.

It should be understood that the disclosure is not limited to the accurate structures described and shown in the accompanying drawings above, and can be subjected to various amendments and changes without departing from its scope. Therefore, the scope of the disclosure shall only be limited by the appended claims.

## Claims

1. A method of controlling a warehouse robot (110, 810), comprising:
obtaining a container scheduling instruction of a first target container (821), wherein the container scheduling instruction comprises a container type of the first target container (S201; S301);
determining a container pose recognition algorithm according to the container type of the first target container (821), and recognizing pose information of the first target container based on the container pose recognition algorithm (S202); and
controlling the warehouse robot (110; 810) to pick up the first target container according to the pose information (S203);
wherein the method is **characterized in that** the determining the container pose recognition algorithm according to the container type of the first target container comprises:
pre-establishing a correspondence between each container type and each container pose recognition algorithm; and
determining the container pose recognition algorithm for the first target container according to the correspondence and the container type of the first target container.

2. The method according to claim 1, wherein according to a surface feature, the container types are divided into at least one of the following: a smooth surface type, a concave and convex surface type, and an identifier-pattern-on-surface type; or
according to a size feature, the container types are divided into at least one of the following: large containers, standard containers, and small containers; or
according to a material feature, the container types are divided into at least one of the following: paper containers and plastic containers.

3. The method according to claim 2, wherein the determining the container pose recognition algorithm according to the container type comprises:
determining that the container pose recognition algorithm for the first target container is a smooth surface type pose recognition algorithm when the container type of the first target container is the smooth surface type (S303); and
accordingly, the recognizing pose information of the first target container based on the smooth surface type pose recognition algorithm (S304) comprises:
obtaining a point cloud image and a preset reference image of the first target container (S3041);
registering the point cloud image and the preset reference image (S3042); and
determining the pose information of the first target container according to a registering result (S3043), or
wherein the determining the container pose recognition algorithm according to the container type of the first target container, and recognizing pose information of the first target container based on the container pose recognition algorithm comprises:
determining that the container pose recognition algorithm for the first target container is a concave and convex type pose recognition algorithm when the container type of the first target container is the concave and convex surface type (S305); and
accordingly, the recognizing pose information of the first target container based on the concave and convex type pose recognition algorithm (S306) comprises:
recognizing concave and convex parts of a surface of the first target container (S3061); and
determining the pose information of the first target container according to physical information of the concave and convex parts (S3062), wherein the physical information comprises one or more of length, width, height, depth, angle, and contour of the concave and convex parts, and the number of concave and convex parts, or
wherein the determining the container pose recognition algorithm according to the container type of the first target container, and recognizing pose information of the first target container based on the container pose recognition algorithm comprises:
determining that the container pose recognition algorithm for the first target container is an identifier-on-surface type pose recognition algorithm when the container type of the first target container is the identifier-pattern-on-surface type (S307); and
accordingly, the recognizing pose information of the first target container based on the identifier-on-surface type pose recognition algorithm (S308) comprises:
recognizing an identifier pattern of the first target container (S3081); and
determining the pose information of the first target container according to pose of the identifier pattern (S3082).

4. The method according to claim 2 or 3, wherein after the obtaining the container scheduling instruction of a first target container, the method further comprises:
obtaining an image of the first target container;
recognizing a color and/or texture of the first target container according to the image of the first target container; and
determining the container type of the first target container is the paper container or a plastic container according to the color and/or texture of the first target container.

5. The method according to any one of claims 1 to 4, wherein before the recognizing pose information of the first target container based on the container pose recognition algorithm, the method further comprises:
recognizing warehouse location identification information of a target warehouse location corresponding to the first target container (S403); and
accordingly, the recognizing pose information of the first target container based on the container pose recognition algorithm comprises:
if the warehouse location identification information is successfully recognized, recognizing the pose information of the first target container based on the container pose recognition algorithm (S404).

6. The method according to any one of claims 1 to 5, wherein the container scheduling instruction further comprises container position information of the first target container (S401), and before the determining a container pose recognition algorithm according to the container type of the first target container, the method further comprises:
moving the warehouse robot to a target position and moving a pickup apparatus of the warehouse robot to a set height according to the container position information (S302; S402).

7. The method according to claim 6, further comprising:
after moving the pickup apparatus of the warehouse robot to the set height, rotating the pickup apparatus of the warehouse robot to a direction facing the first target container, or during a process of moving the pickup apparatus of the warehouse robot to the set height, rotating the pickup apparatus to a direction facing the first target container.

8. The method according to any one of claims 1 to 7, wherein the controlling the warehouse robot to pick up the first target container according to the pose information comprises:
determining a position relation between the pickup apparatus of the warehouse robot and the first target container according to the pose information (S309);
moving and/or rotating the warehouse robot according to the position relation (S310; S408); and
controlling the pickup apparatus of the warehouse robot to pick up the first target container (S311).

9. The method according to claim 8, wherein the container type of the first target container is the paper container, and the controlling a pickup apparatus of the warehouse robot to pick up the first target container comprises:
obtaining a paper container pickup instruction (S4111);
controlling the pickup apparatus of the warehouse robot to pick up the first target container according to the paper container pickup instruction (S4112);
the paper container pickup instruction includes a pickup instruction of a first stage and a pickup instruction of a second stage; a pickup speed of the pickup instruction of the first stage is less than a pickup speed of the pickup instruction of the second stage; the first stage corresponds to a stage when the pickup apparatus does not touch the first target container; and the second stage corresponds to a stage when the pickup apparatus touches the first target container, or
wherein the pose information comprises a distance between the first target container and the warehouse robot and size information and pose position information of the first target container; the container scheduling instruction further comprises a standard size of the first target container; and the determining a position relation between the pickup apparatus of the warehouse robot and the first target container according to the pose information comprises:
determining whether the first target container exists according to the distance (S405);
if yes, determining whether the first target container is valid according to the standard size and the size information of the first target container (S406); and
if yes, determining a position relation between the pickup apparatus of the warehouse robot and the first target container according to the pose information (S407).

10. The method according to claim 8 or 9, wherein after the moving and/or rotating the warehouse robot according to the position relation, the method further comprises:
obtaining a pickup distance between the warehouse robot and the first target container (S409);
determining whether the pickup distance meets a pickup condition of the warehouse robot (S410); and
if yes, controlling the pickup apparatus of the warehouse robot to pick up the first target container (S411).

11. The method according to any one of claims 1 to 10, further comprising:
obtaining a container storage instruction of a second target container (S501), wherein the container storage instruction comprises a warehouse location position of a storage warehouse location corresponding to the second target container, and the second target container is located on the pickup apparatus of the warehouse robot;
moving the warehouse robot to a storage position of the second target container according to the warehouse location position (S502);
obtaining a warehouse location identification information of the storage warehouse location (S503);
determining a second position relation between the warehouse robot and the storage warehouse location according to the warehouse location identification information of the storage warehouse location (S504);
moving and/or rotating the warehouse robot according to the second position relation (S505);
determining whether a third container exists on the storage warehouse location (S506); and
if not, storing the second target container on the storage warehouse location (S507).

12. An apparatus for controlling a warehouse robot (110, 810), comprising:
a scheduling instruction obtaining module (610), configured to obtain a container scheduling instruction of a first target container, wherein the container scheduling instruction comprises a container type of the first target container;
a container pose recognition module (620), configured to determine a container pose recognition algorithm according to the container type of the first target container, and recognize pose information of the first target container based on the container pose recognition algorithm; and
a container pickup module (630), configured to control the warehouse robot to pick up the first target container according to the pose information;
wherein the apparatus is **characterized in that** the container pose recognition module (620) comprises:
a correspondence establishing unit configured to pre-establish a correspondence between each container type and each container pose recognition algorithm;
a pose recognition algorithm determining unit configured to determine the container pose recognition algorithm of the first target container according to the correspondence and the container type of the first target container; and
a container pose recognition unit configured to recognize pose information of the first target container based on the container pose recognition algorithm.

## Patentansprüche

1. Verfahren zum Steuern eines Lagerroboters (110, 810), umfassend:
Erhalten einer Containerplanungsanweisung eines ersten Zielcontainers (821), wobei die Containerplanungsanweisung einen Containertyp des ersten Zielcontainers umfasst (S201; S301);
Bestimmen eines Containerposenerkennungsalgorithmus entsprechend dem Containertyp des ersten Zielcontainers (821) und Erkennen von Poseninformationen des ersten Zielcontainers auf der Grundlage des Containerposenerkennungsalgorithmus (S202); und
Steuern des Lagerroboters (110; 810), um den ersten Zielcontainer entsprechend den Poseninformationen aufzunehmen (S203);
wobei das Verfahren **dadurch gekennzeichnet ist, dass** das Bestimmen des Containerposenerkennungsalgorithmus entsprechend dem Containertyp des ersten Zielcontainers Folgendes umfasst:
Vorabfestlegen einer Korrespondenz zwischen jedem Containertyp und jedem Containerposenerkennungsalgorithmus; und
Bestimmen des Containerposenerkennungsalgorithmus für den ersten Zielcontainer entsprechend der Korrespondenz und dem Containertyp des ersten Zielcontainers.

2. Verfahren nach Anspruch 1, wobei gemäß einem Oberflächenmerkmal die Containertypen in mindestens eines von Folgendem unterteilt werden: einen Typ mit glatter Oberfläche, einen Typ mit konkaver und konvexer Oberfläche und einen Typ mit einem Kennungsmuster auf der Oberfläche; oder
gemäß einem Größenmerkmal die Containertypen in mindestens eines von Folgendem unterteilt werden: große Container, Standardcontainer und kleine Container; oder
gemäß einem Materialmerkmal die Containertypen in mindestens eines von Folgendem unterteilt werden: Papiercontainer und Kunststoffcontainer.

3. Verfahren nach Anspruch 2, wobei das Bestimmen des Containerposenerkennungsalgorithmus gemäß dem Containertyp Folgendes umfasst:
Feststellen, dass der Containerposenerkennungsalgorithmus für den ersten Zielcontainer ein Posenerkennungsalgorithmus für den Typ mit glatter Oberfläche ist, wenn der Containertyp des ersten Zielcontainers der Typ mit glatter Oberfläche ist (S303); und
das Erkennen von Poseninformationen des ersten Zielcontainers auf der Grundlage des Posenerkennungsalgorithmus für den Typ mit glatter Oberfläche (S304) dementsprechend Folgendes umfasst:
Erhalten eines Punktwolkenbildes und eines voreingestellten Referenzbildes des ersten Zielcontainers (S3041);
Registrieren des Punktwolkenbildes und des voreingestellten Referenzbildes (S3042); und
Bestimmen der Poseninformationen des ersten Zielcontainers gemäß einem Registrierungsergebnis (S3043), oder
wobei das Bestimmen des Containerposenerkennungsalgorithmus gemäß dem Containertyp des ersten Zielcontainers und das Erkennen von Poseninformationen des ersten Zielcontainers auf der Grundlage des Containerposenerkennungsalgorithmus Folgendes umfasst:
Feststellen, dass der Containerposenerkennungsalgorithmus für den ersten Zielcontainer ein Posenerkennungsalgorithmus für den konkaven und konvexen Typ ist, wenn der Containertyp des ersten Zielcontainers der Typ mit konkaver und konvexer Oberfläche ist (S305); und
das Erkennen von Poseninformationen des ersten Zielcontainers auf der Grundlage des Posenerkennungsalgorithmus für den konkaven und konvexen Typ (S306) dementsprechend Folgendes umfasst:
Erkennen konkaver und konvexer Teile einer Oberfläche des ersten Zielcontainers (S3061); und
Bestimmen der Poseninformationen des ersten Zielcontainers gemäß physikalischen Informationen der konkaven und konvexen Teile (S3062), wobei die physikalischen Informationen eines oder mehrere von Folgendem umfassen: Länge, Breite, Höhe, Tiefe, Winkel und Kontur der konkaven und konvexen Teile sowie die Anzahl der konkaven und konvexen Teile, oder
wobei das Bestimmen des Containerposenerkennungsalgorithmus gemäß dem Containertyp des ersten Zielcontainers und das Erkennen von Poseninformationen des ersten Zielcontainers auf der Grundlage des Containerposenerkennungsalgorithmus Folgendes umfasst:
Feststellen, dass der Containerposenerkennungsalgorithmus für den ersten Zielcontainer ein Posenerkennungsalgorithmus für den Typ mit einer Kennung auf der Oberfläche ist, wenn der Containertyp des ersten Zielcontainers der Typ mit einem Kennungsmuster auf der Oberfläche ist (S307); und
das Erkennen von Poseninformationen des ersten Zielcontainers auf der Grundlage des Posenerkennungsalgorithmus für den Typ mit einer Kennung auf der Oberfläche (S308) dementsprechend Folgendes umfasst:
Erkennen eines Kennungsmusters des ersten Zielcontainers (S3081); und
Bestimmen der Poseninformationen des ersten Zielcontainers entsprechend einer Pose des Kennungsmusters (S3082).

4. Verfahren nach Anspruch 2 oder 3, wobei das Verfahren nach dem Erhalten der Containerplanungsanweisung eines ersten Zielcontainers ferner Folgendes umfasst:
Erhalten eines Bildes des ersten Zielcontainers;
Erkennen einer Farbe und/oder Textur des ersten Zielcontainers gemäß dem Bild des ersten Zielcontainers; und
Feststellen gemäß der Farbe und/oder Textur des ersten Zielcontainers, ob der Containertyp des ersten Zielcontainers der Papiercontainer oder ein Kunststoffcontainer ist.

5. Verfahren nach einem der Ansprüche 1 bis 4, wobei das Verfahren vor dem Erkennen von Poseninformationen des ersten Zielcontainers auf der Grundlage des Containerposenerkennungsalgorithmus ferner Folgendes umfasst:
Erkennen von Lagerort-Identifikationsinformationen eines Ziel-Lagerorts, der dem ersten Zielcontainer entspricht (S403); und
das Erkennen von Poseninformationen des ersten Zielcontainers auf der Grundlage des Containerposenerkennungsalgorithmus dementsprechend Folgendes umfasst:
wenn die Lagerort-Identifikationsinformationen erfolgreich erkannt werden, Erkennen der Poseninformationen des ersten Zielcontainers auf der Grundlage des Containerposenerkennungsalgorithmus (S404).

6. Verfahren nach einem der Ansprüche 1 bis 5, wobei die Containerplanungsanweisung ferner Containerpositionsinformationen des ersten Zielcontainers (S401) umfasst, und wobei das Verfahren vor dem Bestimmen eines Containerposenerkennungsalgorithmus entsprechend dem Containertyp des ersten Zielcontainers ferner Folgendes umfasst:
Bewegen des Lagerroboters zu einer Zielposition und Bewegen einer Aufnahmevorrichtung des Lagerroboters auf eine eingestellte Höhe entsprechend den Containerpositionsinformationen (S302; S402).

7. Verfahren nach Anspruch 6, umfassend ferner:
nach dem Bewegen der Aufnahmevorrichtung des Lagerroboters auf die eingestellte Höhe, Drehen der Aufnahmevorrichtung des Lagerroboters in eine zum ersten Zielcontainer weisende Richtung, oder während eines Prozesses des Bewegens der Aufnahmevorrichtung des Lagerroboters auf die eingestellte Höhe, Drehen der Aufnahmevorrichtung in eine zum ersten Zielcontainer weisende Richtung.

8. Verfahren nach einem der Ansprüche 1 bis 7, wobei das Steuern des Lagerroboters, um den ersten Zielcontainer entsprechend den Poseninformationen aufzunehmen, Folgendes umfasst:
Bestimmen einer Positionsbeziehung zwischen der Aufnahmevorrichtung des Lagerroboters und dem ersten Zielcontainer gemäß den Poseninformationen (S309);
Bewegen und/oder Drehen des Lagerroboters gemäß der Positionsbeziehung (S310; S408); und
Steuern der Aufnahmevorrichtung des Lagerroboters, um den ersten Zielcontainer aufzunehmen (S311).

9. Verfahren nach Anspruch 8, wobei der Containertyp des ersten Zielcontainers der Papiercontainer ist und das Steuern einer Aufnahmevorrichtung des Lagerroboters, um den ersten Zielcontainer aufzunehmen, Folgendes umfasst:
Erhalten einer Papiercontainer-Aufnahmeanweisung (S4111);
Steuern der Aufnahmevorrichtung des Lagerroboters, um den ersten Zielcontainer gemäß der Papiercontainer-Aufnahmeanweisung aufzunehmen (S4112);
wobei die Papiercontainer-Aufnahmeanweisung eine Aufnahmeanweisung einer ersten Stufe und eine Aufnahmeanweisung einer zweiten Stufe umfasst; wobei eine Aufnahmegeschwindigkeit der Aufnahmeanweisung der ersten Stufe geringer ist als eine Aufnahmegeschwindigkeit der Aufnahmeanweisung der zweiten Stufe; wobei die erste Stufe einer Stufe entspricht, in der die Aufnahmevorrichtung den ersten Zielcontainer nicht berührt; während die zweite Stufe einer Stufe entspricht, in der die Aufnahmevorrichtung den ersten Zielcontainer berührt, oder
wobei die Poseninformationen einen Abstand zwischen dem ersten Zielcontainer und dem Lagerroboter sowie Größeninformationen und Posenpositionsinformationen des ersten Zielcontainers umfassen; wobei die Containerplanungsanweisung ferner eine Standardgröße des ersten Zielcontainers umfasst; und wobei das Bestimmen einer Positionsbeziehung zwischen der Aufnahmevorrichtung des Lagerroboters und dem ersten Zielcontainer gemäß den Poseninformationen Folgendes umfasst:
Feststellen gemäß dem Abstand, ob der erste Zielcontainer vorhanden ist (S405);
wenn ja, Feststellen, ob der erste Zielcontainer gemäß der Standardgröße und den Größeninformationen des ersten Zielcontainers gültig ist (S406); und
wenn ja, Bestimmen einer Positionsbeziehung zwischen der Aufnahmevorrichtung des Lagerroboters und dem ersten Zielcontainer gemäß den Poseninformationen (S407).

10. Verfahren nach Anspruch 8 oder 9, wobei das Verfahren nach dem Bewegen und/oder Drehen des Lagerroboters entsprechend der Positionsbeziehung ferner Folgendes umfasst:
Ermitteln eines Aufnahmeabstandes zwischen dem Lagerroboter und dem ersten Zielcontainer (S409);
Feststellen, ob der Aufnahmeabstand eine Aufnahmebedingung des Lagerroboters erfüllt (S410); und
wenn ja, Steuern der Aufnahmevorrichtung des Lagerroboters, um den ersten Zielcontainer aufzunehmen (S411).

11. Verfahren nach einem der Ansprüche 1 bis 10, umfassend ferner:
Erhalten einer Containerlagerungsanweisung eines zweiten Zielcontainers (S501), wobei die Containerlagerungsanweisung eine Lagerortposition eines Vorratslagerorts umfasst, der dem zweiten Zielcontainer entspricht, und wobei sich der zweite Zielcontainer auf der Aufnahmevorrichtung des Lagerroboters befindet;
Bewegen des Lagerroboters zu einer Lagerposition des zweiten Zielcontainers gemäß der Lagerortposition (S502);
Erhalten einer Lagerortidentifikationsinformation des Vorratslagerorts (S503);
Bestimmen einer zweiten Positionsbeziehung zwischen dem Lagerroboter und dem Vorratslagerort gemäß der Lagerortidentifikationsinformation des Vorratslagerorts (S504);
Bewegen und/oder Drehen des Lagerroboters gemäß der zweiten Positionsbeziehung (S505);
Feststellen, ob ein dritter Container an dem Vorratslagerort vorhanden ist (S506); und
wenn nicht, Lagern des zweiten Zielcontainers an dem Vorratslagerort (S507).

12. Vorrichtung zum Steuern eines Lagerroboters (110, 810), umfassend:
ein Modul (610) zum Erhalten einer Planungsanweisung, das dazu konfiguriert ist, eine Containerplanungsanweisung eines ersten Zielcontainers zu erhalten, wobei die Containerplanungsanweisung einen Containertyp des ersten Zielcontainers umfasst;
ein Containerposenerkennungsmodul (620), das dazu konfiguriert ist, einen Containerposenerkennungsalgorithmus entsprechend dem Containertyp des ersten Zielcontainers zu bestimmen und Poseninformationen des ersten Zielcontainers auf der Grundlage des Containerposenerkennungsalgorithmus zu erkennen; und
ein Containeraufnahmemodul (630), das dazu konfiguriert ist, den Lagerroboter so zu steuern, dass er den ersten Zielcontainer entsprechend den Poseninformationen aufnimmt;
wobei die Vorrichtung **dadurch gekennzeichnet ist, dass** das Containerposenerkennungsmodul (620) Folgendes umfasst:
eine Korrespondenzerstellungseinheit, die dazu konfiguriert ist, eine Korrespondenz zwischen jedem Containertyp und jedem Containerposenerkennungsalgorithmus vorab herzustellen;
eine Posenerkennungsalgorithmus-Bestimmungseinheit, die dazu konfiguriert ist, den Containerposenerkennungsalgorithmus des ersten Zielcontainers gemäß der Korrespondenz und dem Containertyp des ersten Zielcontainers zu bestimmen; und
eine Containerposenerkennungseinheit, die dazu konfiguriert ist, Poseninformationen des ersten Zielcontainers auf der Grundlage des Containerposenerkennungsalgorithmus zu erkennen.

## Revendications

1. Procédé de commande d'un robot d'entreposage (110, 810), comprenant :
obtenir une instruction de planification de conteneurs pour un premier conteneur cible (821), l'instruction de planification de conteneurs comprenant un type de conteneur du premier conteneur cible (S201 ; S301) ;
déterminer un algorithme de reconnaissance de pose de conteneurs en fonction du type de conteneur du premier conteneur cible (821) et reconnaître des informations de pose du premier conteneur cible sur la base de l'algorithme de reconnaissance de pose de conteneurs (S202) ; et
commander le robot d'entreposage (110 ; 810) à saisir le premier conteneur cible en fonction des informations de pose (S203) ;
dans lequel le procédé se **caractérise en ce que** la détermination de l'algorithme de reconnaissance de pose de conteneurs en fonction du type de conteneur du premier conteneur cible comprend :
pré-établir une correspondance entre chaque type de conteneur et chaque algorithme de reconnaissance de pose de conteneurs ; et
déterminer l'algorithme de reconnaissance de pose de conteneurs pour le premier conteneur cible en fonction de la correspondance et du type de conteneur du premier conteneur cible.

2. Procédé selon la revendication 1, dans lequel, en fonction d'une caractéristique de surface, les types de conteneur sont divisés en au moins l'un des suivants : un type à surface lisse, un type à surface concave et convexe, et un type à surface avec motif d'identifiant ; ou
en fonction d'une caractéristique de taille, les types de conteneur sont divisés en au moins l'un des suivants : des grands conteneurs, des conteneurs standards et des petits conteneurs ; ou
en fonction d'une caractéristique de matériau, les types de conteneur sont divisés en au moins l'un des suivants : des conteneurs en papier et des conteneurs en plastique.

3. Procédé selon la revendication 2, dans lequel la détermination de l'algorithme de reconnaissance de pose de conteneurs en fonction du type de conteneur comprend :
déterminer que l'algorithme de reconnaissance de pose de conteneurs pour le premier conteneur cible est un algorithme de reconnaissance de pose du type à surface lisse lorsque le type de conteneur du premier conteneur cible est le type à surface lisse (S303) ; et
en conséquence, la reconnaissance des informations de pose du premier conteneur cible sur la base de l'algorithme de reconnaissance de pose du type à surface lisse (S304) comprend :
obtenir une image de nuage de points et une image de référence prédéfinie du premier conteneur cible (S3041) ;
enregistrer l'image de nuage de points et l'image de référence prédéfinie (S3042) ; et
déterminer les informations de pose du premier conteneur cible en fonction d'un résultat d'enregistrement (S3043), ou
dans lequel la détermination de l'algorithme de reconnaissance de pose de conteneurs en fonction du type de conteneur du premier conteneur cible et de la reconnaissance des informations de pose du premier conteneur cible sur la base de l'algorithme de reconnaissance de pose de conteneurs comprend :
déterminer que l'algorithme de reconnaissance de pose de conteneurs pour le premier conteneur cible est un algorithme de reconnaissance de pose du type concave et convexe lorsque le type de conteneur du premier conteneur cible est le type à surface concave et convexe (S305) ; et
en conséquence, la reconnaissance des informations de pose du premier conteneur cible sur la base de l'algorithme de reconnaissance de pose du type concave et convexe (S306) comprend :
reconnaître des parties concaves et convexes d'une surface du premier conteneur cible (S3061) ; et
déterminer les informations de pose du premier conteneur cible en fonction des informations physiques des parties concaves et convexes (S3062), les informations physiques comprenant un ou plusieurs parmi une longueur, une largeur, une hauteur, une profondeur, un angle et un contour des parties concaves et convexes, et un nombre de parties concaves et convexes, ou
dans lequel la détermination de l'algorithme de reconnaissance de pose de conteneurs en fonction du type de conteneur du premier conteneur cible et de la reconnaissance des informations de pose du premier conteneur cible sur la base de l'algorithme de reconnaissance de pose de conteneurs comprend :
déterminer que l'algorithme de reconnaissance de pose de conteneurs pour le premier conteneur cible est un algorithme de reconnaissance de pose du type à surface avec identifiant lorsque le type de conteneur du premier conteneur cible est le type à surface avec motif d'identifiant (S307) ; et
en conséquence, la reconnaissance des informations de pose du premier conteneur cible sur la base de l'algorithme de reconnaissance de pose du type à surface avec identifiant (S308) comprend :
reconnaître un motif d'identifiant du premier conteneur cible (S3081) ; et
déterminer les informations de pose du premier conteneur cible en fonction de la pose du motif d'identifiant (S3082).

4. Procédé selon la revendication 2 ou 3, dans lequel après l'obtention de l'instruction de planification de conteneurs pour un premier conteneur cible, le procédé comprend en outre :
obtenir une image du premier conteneur cible ;
reconnaître une couleur et/ou texture du premier conteneur cible en fonction de l'image du premier conteneur cible ; et
déterminer que le type de conteneur du premier conteneur cible est un conteneur en papier ou un conteneur en plastique en fonction de la couleur et/ou texture du premier conteneur cible.

5. Procédé selon l'une quelconque des revendications 1 à 4, dans lequel, avant la reconnaissance des informations de pose du premier conteneur cible sur la base de l'algorithme de reconnaissance de pose de conteneurs, le procédé comprend en outre :
reconnaître des informations d'identification de l'emplacement d'entreposage pour un emplacement d'entreposage cible correspondant au premier conteneur cible (S403) ; et
en conséquence, la reconnaissance des informations de pose du premier conteneur cible sur la base de l'algorithme de reconnaissance de pose de conteneurs comprend :
si les informations d'identification de l'emplacement d'entreposage sont reconnues avec succès, reconnaître les informations de pose du premier conteneur cible sur la base de l'algorithme de reconnaissance de pose de conteneurs (S404).

6. Procédé selon l'une quelconque des revendications 1 à 5, dans lequel l'instruction de planification de conteneurs comprend en outre des informations de position de conteneur du premier conteneur cible (S401), et avant la détermination d'un algorithme de reconnaissance de pose de conteneurs en fonction du type de conteneur du premier conteneur cible, le procédé comprend en outre :
déplacer le robot d'entreposage vers une position cible et déplacer un dispositif de préhension du robot d'entreposage jusqu'à une hauteur définie en fonction des informations de position de conteneur (S302 ; S402).

7. Procédé selon la revendication 6, comprenant en outre :
après le déplacement du dispositif de préhension du robot d'entreposage jusqu'à la hauteur définie, faire tourner le dispositif de préhension du robot d'entreposage dans une direction en regard du premier conteneur cible, ou, pendant un processus de déplacement du dispositif de préhension du robot d'entreposage jusqu'à la hauteur définie, faire tourner le dispositif de préhension dans une direction en regard du premier conteneur cible.

8. Procédé selon l'une quelconque des revendications 1 à 7, dans lequel la commande du robot d'entreposage à saisir le premier conteneur cible en fonction des informations de pose comprend :
déterminer une relation de positions entre le dispositif de préhension du robot d'entreposage et le premier conteneur cible en fonction des informations de pose (S309) ;
déplacer et/ou faire tourner le robot d'entreposage en fonction de la relation de positions (S310 ; S408) ; et
commander le dispositif de préhension du robot d'entreposage à saisir le premier conteneur cible (S311).

9. Procédé selon la revendication 8, dans lequel le type de conteneur du premier conteneur cible est le conteneur en papier, et la commande du dispositif de préhension du robot d'entreposage à saisir le premier conteneur cible comprend :
obtenir une instruction de préhension du conteneur en papier (S4111) ;
commander le dispositif de préhension du robot d'entreposage à saisir le premier conteneur cible en fonction de l'instruction de préhension du conteneur en papier (S4112) ;
l'instruction de préhension du conteneur en papier comprend une instruction de préhension d'un premier étage et une instruction de préhension d'un deuxième étage ; une vitesse de préhension de l'instruction de préhension du premier étage est inférieure à une vitesse de préhension de l'instruction de préhension du deuxième étage ; le premier étage correspond à un étage auquel le dispositif de préhension ne touche pas le premier conteneur cible ; et le deuxième étage correspond à un étage auquel le dispositif de préhension touche le premier conteneur cible, ou
dans lequel les informations de pose comprennent une distance entre le premier conteneur cible et le robot d'entreposage ainsi que des informations de taille et des informations de pose du premier conteneur cible ; l'instruction de planification de conteneurs comprend en outre une taille standard du premier conteneur cible ; et la détermination d'une relation de positions entre le dispositif de préhension du robot d'entreposage et le premier conteneur cible en fonction des informations de pose comprend :
déterminer si le premier conteneur cible existe en fonction de la distance (S405) ;
si oui, déterminer si le premier conteneur cible est valide en fonction de la taille standard et des informations de taille du premier conteneur cible (S406) ; et
si oui, déterminer une relation de positions entre le dispositif de préhension du robot d'entreposage et le premier conteneur cible en fonction des informations de pose (S407).

10. Procédé selon la revendication 8 ou 9, dans lequel, après le déplacement et/ou la rotation du robot d'entreposage en fonction de la relation de positions, le procédé comprend en outre :
obtenir une distance de préhension entre le robot d'entreposage et le premier conteneur cible (S409) ;
déterminer si la distance de préhension satisfait à une condition de préhension du robot d'entreposage (S410) ; et
si oui, commander le dispositif de préhension du robot d'entreposage à saisir le premier conteneur cible (S411).

11. Procédé selon l'une quelconque des revendications 1 à 10, comprenant en outre :
obtenir une instruction de stockage de conteneurs pour un deuxième conteneur cible (S501), l'instruction de stockage de conteneurs comprenant une position d'emplacement d'entreposage d'un emplacement d'entreposage de stockage correspondant au deuxième conteneur cible, et le deuxième conteneur cible étant situé sur le dispositif de préhension du robot d'entreposage ;
déplacer le robot d'entreposage vers une position de stockage du deuxième conteneur cible en fonction de la position d'emplacement d'entreposage (S502) ;
obtenir des informations d'identification de l'emplacement d'entreposage de l'emplacement d'entreposage de stockage (S503) ;
déterminer une deuxième relation de positions entre le robot d'entreposage et l'emplacement d'entreposage de stockage en fonction des informations d'identification de l'emplacement d'entreposage de l'emplacement d'entreposage de stockage (S504) ;
déplacer et/ou faire tourner le robot d'entreposage en fonction de la deuxième relation de positions (S505) ;
déterminer si un troisième conteneur existe sur l'emplacement d'entreposage de stockage (S506) ; et
sinon, stocker le deuxième conteneur cible sur l'emplacement d'entreposage de stockage (S507).

12. Dispositif de commande d'un robot d'entreposage (110, 810), comprenant :
un module d'obtention d'instruction de planification (610), configuré pour obtenir une instruction de planification de conteneurs pour un premier conteneur cible, l'instruction de planification de conteneurs comprenant un type de conteneur du premier conteneur cible ;
un module de reconnaissance de pose de conteneurs (620), configuré pour déterminer un algorithme de reconnaissance de pose de conteneurs en fonction du type de conteneur du premier conteneur cible et reconnaître des informations de pose du premier conteneur cible sur la base de l'algorithme de reconnaissance de pose de conteneurs ; et
un module de préhension de conteneur (630), configuré pour commander le robot d'entreposage à saisir le premier conteneur cible en fonction des informations de pose ;
dans lequel le dispositif se **caractérise en ce que** le module de reconnaissance de pose de conteneurs (620) comprend :
une unité d'établissement de correspondance configurée pour pré-établir une correspondance entre chaque type de conteneur et chaque algorithme de reconnaissance de pose de conteneurs ;
une unité de détermination d'algorithme de reconnaissance de pose configurée pour déterminer l'algorithme de reconnaissance de pose de conteneurs pour le premier conteneur cible en fonction de la correspondance et du type de conteneur du premier conteneur cible ; et
une unité de reconnaissance de pose de conteneurs configurée pour reconnaître des informations de pose du premier conteneur cible sur la base de l'algorithme de reconnaissance de pose de conteneurs.
